# FASCICULE DE BREVET EUROPEEN

(11) **EP 1 946 004 B1**
(45) Date de publication et mention de la délivrance du brevet: **26.09.2012**
(21) Numéro de dépôt: 06831281.8
(22) Date de dépôt: 23.10.2006
(51) Int. Cl.: F27D 17/00, F23D 14/32, F23C 6/04, C03B 5/235

(54) **PROCEDE DE COMBUSTION MIXTE DANS UN FOUR A REGENERATEURS**
VERFAHREN ZUR DURCHFÜHRUNG EINES KOMBINIERTEN BRENNENS IN EINEM RÜCKGEWINNUNGSOFEN
METHOD FOR CARRYING OUT COMBINED BURNING IN A RECOVERING FURNACE

(30) Priorité: 24.10.2005 FR 0553229
(43) Date de publication de la demande: 23.07.2008
(73) Titulaire: L'AIR LIQUIDE, Société Anonyme pour l'Etude et l'Exploitation des Procédés Georges Claude, 75007 Paris (FR)
(72) Inventeur: LEROUX, Bertrand, F-91310 Linas (FR); JARRY, Luc, F-92190 Meudon (FR); SIMON, Jean-François, F-94340 Joinville Le Pont (FR); TSIAVA, Rémi, F-91250 St Germain Les Corbeil (FR)
(74) Mandataire: De Vleeschauwer, Natalie Y.L.D.
(86) Numéro de dépôt international: PCT/FR2006/051086
(87) Numéro de publication internationale: WO 2007/048966

(56) Documents cités:
- FR-A- 2 837 913
- US-A- 6 041 622
- US-A1- 2002 152 770
- US-A1- 2004 157 178
- US-B1- 6 171 100

## Description

La présente invention concerne un procédé de combustion dans un four équipé de moyens de récupération d'énergie.

Les fours à régénérateurs sont des fours équipés d'empilages de réfractaires sur leurs côtés latéraux. Ces réfractaires sont des échangeurs de chaleur permettant de récupérer la chaleur des fumées de combustion sortant des côtés latéraux du four et de transférer cette chaleur à de l'air froid fourni au four. Les réfractaires des régénérateurs sont chauffés à de très hautes températures par les fumées de combustion (de l'ordre de 1300 à 1500°C). En pratique, les fumées de combustion sortant par un côté du four sont mises au contact des réfractaires depuis leur partie supérieure jusqu'à leur partie inférieure pendant un cycle généralement d'environ 20 minutes. Durant le cycle suivant, l'air froid de combustion destiné à alimenter les brûleurs du four est mis au contact des réfractaires depuis leur partie inférieure jusqu'à leur partie supérieure de manière à en extraire leur chaleur. L'air de combustion est alors chauffé à une température généralement de l'ordre de 1100 à 1300°C avant d'être introduit dans la chambre de combustion du four. Les courants de fumée de combustion et d'air de combustion sont inversés à chaque cycle de manière à ce que chaque face de régénérateur puisse être alternativement chauffée et utilisée pour préchauffer l'air de combustion. Le préchauffage de l'air de combustion permet une combustion à l'air avec un rendement énergétique élevé. Pour les fours à récupérateurs, l'air de combustion est chauffé en continu par des échangeurs métalliques alimentés en fumées de combustion. Ces fours à régénérateurs fonctionnent avec des brûleurs aéro-combustible (ou aéro-brûleurs), c'est-à-dire des brûleurs dont le comburant est de l'air. On parle alors également d'aéro-combustion.

La durée de campagne de ces fours est généralement de l'ordre de 10 à 15 ans. En cours de campagne, le problème de base consiste à maintenir la capacité de production du four malgré l'usure croissante des réfractaires et des régénérateurs. Ce problème peut même se révéler encore plus critique en cas de besoin d'augmentation de production au-delà de la capacité nominale du four pour pouvoir répondre à l'évolution dans le temps des besoins du marché.

Afin de maintenir ou d'augmenter la capacité de production d'un four à régénérateurs existant, différentes solutions existent. Tout d'abord, il est possible de compléter le chauffage électriquement en mettant en place des électrodes au travers de la sole ou des parois latérales de cuve du bain de verre en cours de fusion. Cette solution présente l'avantage intrinsèque d'une grande flexibilité (capacité de production pouvant être accrue de 10 à 15 %) mais sa mise en oeuvre est délicate et il n'y a pas de garantie de résultat car le choix des distributions de puissance et d'emplacement des électrodes est empirique (il n'existe pas de modèle précis de l'effet des électrodes sur le bain de verre fondu). Il est également difficile de placer des électrodes à chaud (surtout si les emplacements n'ont pas été prévus avant la construction du four). Le coût l'investissement est élevé (transformateurs) et le prix de l'énergie électrique significativement plus élevé que celui des combustibles fossiles traditionnellement utilisés pour la fusion du verre.

Une autre solution consiste à convertir partiellement l'aéro-combustion mise en oeuvre dans le four en oxy-combustion (par oxy-combustion, on entend une combustion à l'aide d'un comburant comprenant un gaz oxygéné plus riche en oxygène que l'air). L'oxy-combustion peut être mise en oeuvre par l'emploi d'une des technologies suivantes :
- l'ajout d'oxy-brûleurs (ou brûleurs oxy-combustible) au travers de la voûte du four en zone fusion (on entend par oxy-brûleurs ou brûleurs oxy-combustible, des brûleurs dont le comburant est un gaz oxygéné plus riche en oxygène que l'air),
- ou la conversion partielle ou totale d'aéro-brûleurs à l'oxy-combustion, l'ajout d'oxy-brûleurs au travers de la paroi du four (us 2002/0152770).

Toutefois, ces deux solutions présentent des inconvénients. L'ajout d'oxy-brûleurs au travers de la voûte du four présente des difficultés intrinsèques au positionnement de brûleurs oxygène en voûte : le placement de ce type de brûleurs en cours de campagne (forage en voûte) est délicat. Des contraintes thermomécaniques excessives (au niveau des blocs et nez des brûleurs (pression et température élevées) ou de la voûte elle-même (fragilisation)) peuvent induire une usure plus rapide des matériaux et des équipements et, par conséquent, des défauts plus nombreux dans le verre. On observe également un accroissement des envols de poussières à partir du tapis de composition couvrant le bain de verre fondu en zone de fusion (flammes impactantes) et la perturbation de l'état Redox du verre (présence accrue de CO au contact du verre en zone de fusion) pouvant causer des défauts du verre.

Concernant la conversion partielle ou totale d'aéro-brûleurs à l'oxy-combustion, elle est surtout mise en oeuvre par le placement de lances à oxygène sous une gaine d'air en ajustant le débit d'air chaud introduit par la gaine concernée ou par ajout d'oxy-brûleurs de chaque côté du four. Les limitations de ces conversion à l'oxygène actuellement disponibles sur les fours à régénérateurs sont les suivantes :
- on observe un accroissement significatif des températures de voûte (+ 30 à 50°C) et de superstructure (à proximité des emplacements de mise en oeuvre de l'oxygène) potentiellement préjudiciable à l'usure et la tenue du four ainsi qu'à la qualité du verre (défauts de type « pierres réfractaires »). Cet inconvénient est particulièrement marqué dans le cas des conversions partielles à l'oxygène pour lesquelles une augmentation significative des températures en racine de flamme (voire dans la gaine) est observée (combustion plus rapide résultant de la quantité d'oxygène plus grande dans la flamme et de l'accroissement de température de l'air préchauffé dans les régénérateurs).
- augmentation insuffisante de la production du four (tirée) :
   aucune garantie d'accroissement de tirée en cas de conversion partielle de port (raccourcissement quasi systématique de flamme préjudiciable au transfert thermique au bain de verre suite à un échauffement excessif en racine et à une moins bonne couverture du bain de verre fondu par les flammes),
   accroissement faible dans le cas de brûleurs oxy-combustibles ajoutés de chaque côté du four, cet accroissement étant limité par la taille des flammes oxygène développées et la puissance maximale injectable dans la zone considérée,
- risque d'interaction négative avec les flammes issues de l'aéro-combustion :
   déviation de flammes préjudiciable à l'usure des réfractaires et à l'efficacité du transfert thermique à la charge,
   . émissions de NOx difficile à maîtriser (en kg NOx/tonne de verre fondu),
   augmentation des émissions en cas de conversion partielle de ports (flammes plus chaudes et plus courtes),
   au mieux, stabilisation des émissions en cas de conversion totale d'un port (à côté d'un port aéro) ou dans le cas de brûleurs oxygène ajoutés sur le four en coexistence avec des ports aéro.
- difficulté de placement de brûleurs oxygène conventionnels sous la gaine d'un port difficile, voire impossible à mettre en oeuvre industriellement en raison du manque d'espace sous la gaine d'air.

Le but de la présente invention est de proposer un procédé permettant d'augmenter la capacité (tirée et qualité de verre) des fours à régénérateurs à l'aide d'une technologie d'oxy-combustion aisée à mettre en oeuvre.

Un autre but est de proposer un procédé permettant d'augmenter la capacité des fours à régénérateurs à l'aide d'une technologie d'oxy-combustion apte à mieux contrôler les émissions NOx dans les fumées par rapport aux technologies existantes.

Un autre but est de proposer un procédé permettant d'adapter la combustion mixte aéro- et oxy-combustible dans des fours à régénérateurs sans modifier le profil de la flamme aéro-combustible.

Dans ce but, l'invention concerne un procédé de combustion dans un four équipé de moyens de récupération d'énergie et de brûleurs, dans lequel :
- la chaleur des fumées de combustion est alternativement récupérée par une partie des moyens de récupération d'énergie puis par l'autre partie des moyens de récupération d'énergie,
- au moins une partie des brûleurs sont des brûleurs aéro-combustibles constitués par au moins une gaine d'air sous laquelle ou au centre de laquelle est placée au moins un injecteur d'un premier combustible, ledit injecteur étant perpendiculaire à la paroi du four,
- on met alternativement en oeuvre deux phases :
   - une première phase au cours de laquelle seule une partie des moyens de récupération d'énergie fonctionnent et seuls fonctionnent les aéro-brûleurs susceptibles de diriger leurs flammes vers lesdits moyens de récupération d'énergie en fonctionnement,
   - une deuxième phase au cours de laquelle seule l'autre partie des moyens de récupération d'énergie fonctionnent et seuls fonctionnent les aéro-brûleurs susceptibles de diriger leurs flammes vers lesdits moyens de récupération d'énergie en fonctionnement,
et dans lequel au moins un brûleur oxy-combustible est placé sous la gaine d'air d'au moins un brûleur aéro-combustible, ledit brûleur oxy-combustible comprenant des injecteurs de fluides perpendiculaires à la paroi du four et mettant en oeuvre un procédé de combustion étagée d'un second combustible et d'un gaz riche en oxygène, ledit procédé de combustion étagée étant mis en oeuvre de manière à ce qu'on injecte au moins un jet du second combustible et au moins un jet de gaz riche en oxygène, le jet de gaz riche en oxygène comportant un jet primaire de gaz riche en oxygène et un jet secondaire de gaz riche en oxygène,
le jet primaire de gaz riche en oxygène étant injecté à proximité du jet du second combustible de manière à engendrer une première combustion incomplète, les gaz issus de cette première combustion comportant encore au moins une partie du second combustible,
tandis que le jet secondaire de gaz riche en oxygène est injecté à une distance I₂ du jet du second combustible qui est supérieure à la distance entre le jet du second combustible et le jet primaire de gaz riche en oxygène le plus proche du jet du second combustible, de manière à entrer en combustion avec la partie du second combustible présent dans les gaz issus de la première combustion,
le jet primaire de gaz riche en oxygène étant divisé en au moins deux jets primaires : au moins un premier jet primaire de gaz riche en oxygène qui est injecté au contact du jet du second combustible, et au moins un second jet primaire de gaz riche en oxygène injecté à une distance I₁ du jet du second combustible, avec I₂ supérieur à I₁.

L'invention concerne également un système pour la mise en oeuvre d'une combustion dans un four comprenant :
- au moins un brûleur aéro-combustible composé :
   . d'une gaine d'air, et
   . d'au moins un injecteur de combustible placé sous ou au centre de la gaine d'air, et perpendiculaire à la paroi du four,
- au moins un brûleur oxy-combustible placé sous la gaine d'air du brûleur aéro-combustible et composé d'au moins un ensemble d'injecteurs comprenant :
   . au moins un injecteur de combustible,
   . au moins un injecteur de gaz riche en oxygène placé de manière à injecter ledit gaz riche en oxygène au contact du combustible injecté par l'injecteur du brûleur oxy-combustible,
   . au moins un injecteur de gaz riche en oxygène placé à une distance I₁ de l'injecteur de combustible du brûleur oxy-combustible,
   . au moins un injecteur de gaz riche en oxygène à une distance I₂ de l'injecteur de combustible du brûleur oxy-combustible, avec I₂ > I₁,
lesdits injecteurs étant perpendiculaires à la paroi du four.

D'autres caractéristiques et avantages de l'invention apparaîtront à la lecture de la description qui va suivre. Des formes et des modes de réalisation de l'invention sont donnés à titre d'exemples non limitatifs, illustrés par les dessins joints dans lesquels :
- la figure 1 est une vue schématique d'un four équipé de moyens de récupération d'énergie latéraux,
- la figure 2 est une vue schématique d'un four équipé de moyens de récupération d'énergie au niveau du chargement de la matière à fondre,
- la.figure 3 est une vue schématique du système de combustion selon l'invention.

L'invention concerne donc tout d'abord un procédé de combustion dans un four équipé de moyens de récupération d'énergie et de brûleurs, dans lequel :
- la chaleur des fumées de combustion est alternativement récupérée par une partie des moyens de récupération d'énergie puis par l'autre partie des moyens de récupération d'énergie,
- au moins une partie des brûleurs sont des brûleurs aéro-combustibles constitués par au moins une gaine d'air sous laquelle ou au centre de laquelle est placée au moins un injecteur d'un premier combustible, ledit injecteur étant perpendiculaire à la paroi du four,
- on met alternativement en oeuvre deux phases :
   une première phase au cours de laquelle seule une partie des moyens de récupération d'énergie fonctionnent et seuls fonctionnent les aéro-brûleurs susceptibles de diriger leurs flammes vers lesdits moyens de récupération d'énergie en fonctionnement,
   . une deuxième phase au cours de laquelle seule l'autre partie des moyens de récupération d'énergie fonctionnent et seuls fonctionnent les aéro-brûleurs susceptibles de diriger leurs flammes vers lesdits moyens de récupération d'énergie en fonctionnement,
et dans lequel au moins un brûleur oxy-combustible est placé sous la gaine d'air d'au moins un brûleur aéro-combustible, ledit brûleur oxy-combustible comprenant des injecteurs de fluides perpendiculaires à la paroi du four et mettant en oeuvre un procédé de combustion étagée d'un second combustible et d'un gaz riche en oxygène, ledit procédé de combustion étagée étant mis en oeuvre de manière à ce qu'on injecte au moins un jet du second combustible et au moins un jet de gaz riche en oxygène, le jet de gaz riche en oxygène comportant un jet primaire de gaz riche en oxygène et un jet secondaire de gaz riche en oxygène,
le jet primaire de gaz riche en oxygène étant injecté à proximité du jet du second combustible de manière à engendrer une première combustion incomplète, les gaz issus de cette première combustion comportant encore au moins une partie du second combustible,
tandis que le jet secondaire de gaz riche en oxygène est injecté à une distance I₂ du jet du second combustible qui est supérieure à la distance entre le jet du second combustible et le jet primaire de gaz riche en oxygène le plus proche du jet du second combustible, de manière à entrer en combustion avec la partie du second combustible présent dans les gaz issus de la première combustion,
le jet primaire de gaz riche en oxygène étant divisé en au moins deux jets primaires : au moins un premier jet primaire de gaz riche en oxygène qui est injecté au contact du jet du second combustible, et au moins un second jet primaire de gaz riche en oxygène injecté à une distance I₁ du jet du second combustible, avec I₂ supérieur à I_{1.}

Le four du procédé selon l'invention est équipé de moyens de récupération d'énergie utilisés pour chauffer de l'air froid, c'est-à-dire de l'air ambiant, en lui communiquant l'énergie récupérée dans les fumées de combustion. Ces moyens de récupération d'énergie sont placés soit de part et d'autre du four sur les côtés latéraux du four, soit à l'extrémité du four où la matière à fondre est chargée.

Le four est également équipé de brûleurs aéro-combustibles. Par "brûleurs aéro-combustibles", on entend dans la présente invention des brûleurs mettant en oeuvre la combustion d'air et d'un combustible. Selon le présent procédé, un brûleur aéro-combustible est constitué par au moins une gaine d'air sous laquelle ou au centre de laquelle est placée au moins un injecteur de combustible. L'injecteur est perpendiculaire à la paroi du four de manière à créer une flamme sensiblement perpendiculaire à la paroi du four. Toutefois, des effets d'angle peuvent être donnés à la flamme. La chaleur dégagée par les fumées de combustion des brûleurs aéro-combustibles est récupérée par les moyens de récupération d'énergie en fonctionnement, le mode de fonctionnement correspondant à la phase où les moyens de récupération d'énergie récupèrent la chaleur, tandis que le mode d'arrêt correspond au cas où les moyens de récupération d'énergie rendent leur chaleur à de l'air froid. Les moyens de récupération d'énergie et les brûleurs aéro-combustibles fonctionnent en opposition de phase : la partie des brûleurs aéro-combustibles qui ne dirigent pas leurs flammes vers les moyens de récupération d'énergie en fonctionnement sont éteints tandis que la partie des brûleurs aéro-combustibles qui dirigent leur flamme et leur fumée de combustion vers les moyens de récupération d'énergie en fonctionnement fonctionnent.

Selon l'invention, le procédé met également en oeuvre des brûleurs oxy-combustible placés sous la gaine d'air d'au moins un brûleur aéro-combustible. Par brûleur oxy-combustible, on entend un brûleur mettant en oeuvre la combustion d'un combustible et d'un gaz riche en oxygène, c'est-à-dire un gaz présentant une concentration en oxygène supérieure à 90 % en volume. L'oxygène produit par un procédé VSA (adsorption à régénération sous vide) est particulièrement adapté. Le combustible des brûleurs oxy-combustible peut être identique ou différent de celui des brûleurs oxy-combustible. Il s'entend que les brûleurs oxy-combustible sont sous une gaine d'air mais restent au-dessus du bain en fusion. Le procédé peut mettre en oeuvre un brûleur oxy-combustible sous une gaine d'air ou plusieurs brûleurs oxy-combustible sous une ou plusieurs gaines d'air. Si le four est équipé de gaines d'air placées dans les côtés latéraux, alors, de préférence, le procédé met en oeuvre un nombre pair de brûleurs oxy-combustible placés symétriquement de chaque côté latéral sous des gaines d'air se faisant face. Les brûleurs oxy-combustible mis en oeuvre selon l'invention sont d'un type particulier : ils doivent mettre en oeuvre une combustion étagée du combustible qu'ils brûlent, le gaz riche en oxygène étant injecté sous la forme d'au moins trois jets différents : injection en un premier jet primaire au contact du combustible, injection en un deuxième jet primaire injecté à une distance I₁ du point d'injection du combustible et injection en un jet secondaire injecté à une distance I₂. Par injection au contact, on entend le fait qu'un des jets primaires est injecté soit au centre du jet du deuxième combustible, soit sous forme de gainage du jet du deuxième combustible, la distance entre le premier jet primaire de gaz riche en oxygène et le deuxième combustible étant donc nulle. Ce type de brûleur oxy-combustible est particulièrement décrit dans les demandes WO 02/081967, WO 2004/094902 ou WO 2005/059440. Les injecteurs du brûleur oxy-combustible sont perpendiculaires à la paroi du four de manière à créer une flamme sensiblement perpendiculaire à la paroi du four. Toutefois des effets d'angle peuvent être donnés à la flamme. La flamme créée par le brûleur oxy-combustible est sensiblement parallèle à celle créée par le brûleur aéro-combustible.

Si le four est un four de fusion dans lequel les moyens de récupération d'énergie sont placés sur les côtés latéraux, alors de préférence au moins un brûleur oxy-combustible est placé sous une gaine d'air située dans la zone de fusion du four.

Lorsqu'un brûleur oxy-combustible est placé sous une gaine d'air d'un brûleur aéro-combustible, alors le débit de gaz riche en oxygène injecté par le brûleur oxy-combustible est généralement compris entre 20 et 100 % du débit de gaz riche en oxygène et d'air injecté par ledit brûleur et la gaine d'air sous laquelle il est placé. Le débit de 100 % correspond à la phase où le brûleur aéro-combustible est éteint.

De préférence, la combustion mise en oeuvre par les brûleurs aéro-combustibles est sous-stoechiométrique et la combustion mise en oeuvre par les brûleurs oxy-combustibles est sur-stoechiométrique.

Selon l'invention, il est possible de contrôler le procédé de combustion, et notamment la combustion mise en oeuvre dans les brûleurs oxy-combustibles, en fonction des cycles de récupération de chaleur des moyens de récupération d'énergie. Ainsi, selon une première variante, pour chaque brûleur oxy-combustible placé sous la gaine d'air d'un brûleur aéro-combustible en fonctionnement, le débit de gaz riche en oxygène dans le jet secondaire de gaz riche en oxygène peut représenter 70 à 80 %, de préférence 75 %, de la quantité totale de gaz riche en oxygène injecté par ledit brûleur oxy-combustible. Cette répartition du gaz riche en oxygène dans les injecteurs secondaires de gaz oxydant des oxy-brûleurs permet de fournir une flamme aéro et oxy large.

Selon une deuxième variante, pour chaque brûleur oxy-combustible placé sous la gaine d'air d'un brûleur aéro-combustible en fonctionnement, le débit de gaz riche en oxygène dans le jet secondaire de gaz riche en oxygène peut représenter 45 à 55 %, de préférence 50 %, de la quantité totale de gaz riche en oxygène injecté par ledit brûleur oxy-combustible. Cette répartition du gaz riche en oxygène dans les injecteurs secondaires de gaz oxydant des oxy-brûleurs permet de fournir une flamme aéro et oxy stable et de concentrer le transfert de chaleur à la matière en fusion placée près de la racine de la flamme.

Concernant le fonctionnement des brûleurs oxy-combustibles, deux modes de fonctionnement du procédé peuvent être mis en oeuvre.

Selon un premier mode du procédé, seuls les brûleurs oxy-combustibles dont les flammes sont dirigées vers les moyens de récupération d'énergie en fonctionnement fonctionnent également. Dans ce mode, les brûleurs oxy-combustible fonctionnent parallèlement aux brûleurs-aéro-combustibles : lorsqu'une partie des moyens de récupération d'énergie récupèrent les fumées des aéro-brûleurs en fonctionnement, les oxy-brûleurs placés sous la gaine d'air de ces derniers brûleurs aéro-combustibles fonctionnent également, et lorsque ces derniers moyens de récupération d'énergie s'éteignent, alors ces aéro-brûleurs qui leur fournissaient de la chaleur s'éteignent également et les oxy-brûleurs placés sous la gaine d'air de ces brûleurs aéro-combustibles éteints, s'éteignent également.

Selon un second mode du procédé, les brûleurs oxy-combustibles fonctionnent en permanence, indépendamment des phases de fonctionnement et d'arrêt des moyens de récupération de chaleur et des brûleurs aéro-combustibles. Lors de la mise en oeuvre de ce second mode, selon une première variante, pour chaque brûleur oxy-combustible placé sous la gaine d'air d'un brûleur aéro-combustible en arrêt, le débit de gaz riche en oxygène dans le jet secondaire de gaz riche en oxygène peut représenter 70 à 80 %, de préférence 75 %, de la quantité totale de gaz riche en oxygène injecté par ledit brûleur oxy-combustible. Cette répartition du gaz riche en oxygène dans les injecteurs secondaires de gaz oxydant des oxy-brûleurs permet de réduire les émissions NOx des flammes et de fournir une flamme large.

Lors de la mise en oeuvre de ce second mode, selon une deuxième variante, pour chaque brûleur oxy-combustible placé sous la gaine d'air d'un brûleur aéro-combustible en arrêt, le débit de gaz riche en oxygène dans le jet secondaire de gaz riche en oxygène peut représenter 45 à 55 %, de préférence 50 %, de la quantité totale de gaz riche en oxygène injecté par ledit brûleur oxy-combustible. Cette répartition du gaz riche en oxygène dans les injecteurs secondaires de gaz oxydant des oxy-brûleurs permet de réduire les émissions NOx des flammes et d'augmenter la température des fumées.

L'invention concerne également un système pour la mise en oeuvre d'une combustion dans un four comprenant :
- au moins un brûleur aéro-combustible composé :
   . d'une gaine d'air, et
   . d'au moins un injecteur de combustible placé sous ou au centre de la gaine d'air et perpendiculaire à la paroi du four,
- au moins un brûleur oxy-combustible placé sous la gaine d'air du brûleur aéro-combustible et composé d'au moins un ensemble d'injecteurs comprenant :
   . au moins un injecteur de combustible,
   . au moins un injecteur de gaz riche en oxygène placé de manière à injecter ledit gaz riche en oxygène au contact du combustible injecté par l'injecteur du brûleur oxy-combustible,
   . au moins un injecteur de gaz riche en oxygène placé à une distance I₁ de l'injecteur de combustible du brûleur oxy-combustible,
   . au moins un injecteur de gaz riche en oxygène à une distance I₂ de l'injecteur de combustible du brûleur oxy-combustible, avec I₂ > I₁,
lesdits injecteurs du brûleur oxy-combustible étant perpendiculaires à la paroi du four.

Le brûleur oxy-combustible peut être choisi parmi ceux décrits dans les demandes WO 02/081967 WO 2004/094902 ou WO 2005/059440.

En général, dans le système de combustion selon l'invention, l'injecteur de combustible du brûleur aéro-combustible est placé sous la gaine d'air et ledit injecteur et les injecteurs du brûleur oxy-combustible sont disposés sensiblement dans le même plan horizontal.

De préférence, le brûleur oxy-combustible est composé de deux ensembles d'injecteurs, lesdits ensembles étant disposés symétriquement par rapport au centre de la gaine d'air sous lequel le brûleur est placé. Dans ce système préféré, il est avantageux de placer au moins un injecteur de combustible du brûleur aéro-combustible entre les deux ensembles d'injecteurs du brûleur oxy-combustible. Selon une mise en oeuvre préférée, le brûleur oxy-combustible comprend au moins deux injecteurs de combustible et lesdits injecteurs de combustible sont placés de chaque côté des deux ensembles d'injecteurs du brûleur oxy-combustible.

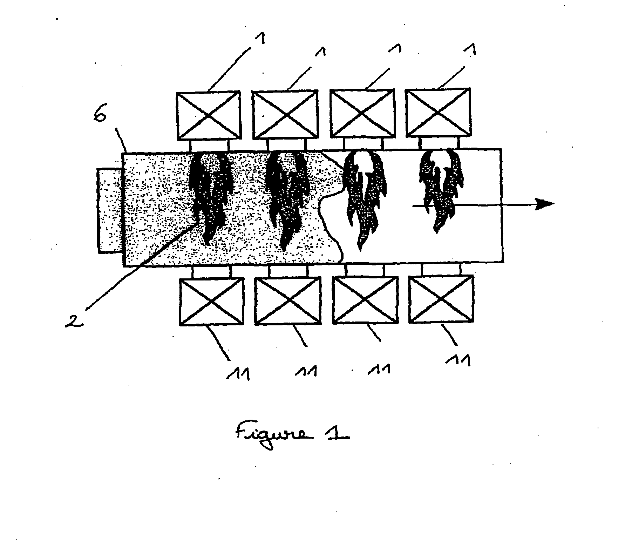

Les figures 1, 2 et 3 illustrent le dispositif et le procédé selon l'invention.

La figure 1 illustre le fonctionnement d'un four équipé de brûleurs aéro-combustibles et de moyens de récupération d'énergie latéraux. Les moyens de récupération d'énergie (1 et 11) sont placés latéralement sur les côtés du four 6. Des brûleurs aéro-combustibles (non représentés) produisent des flammes 2 : les flammes de ces brûleurs sont dirigées vers les moyens de récupération d'énergie 11 en fonctionnement, tandis que les moyens de récupération d'énergie 1 placés du même côté latéral du four 6 que les brûleurs en fonctionnement sont éteints.

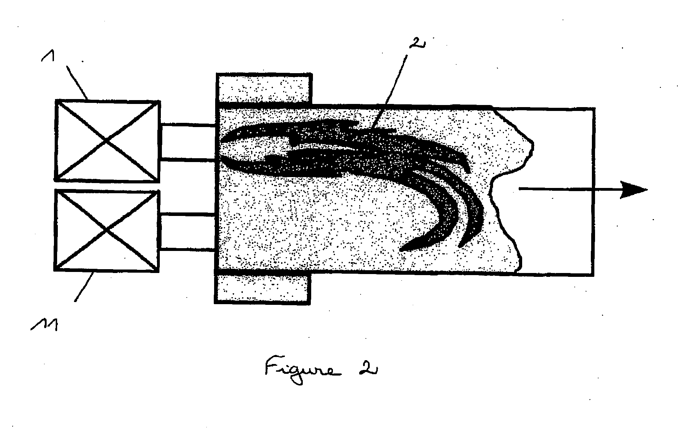

La figure 2 illustre le fonctionnement d'un four équipé de brûleurs aéro-combustibles et de moyens de récupération d'énergie (1, 11) placés à l'extrémité du four (6) où la matière à fondre est chargée. Un brûleur aéro-combustible (non représenté) produit une flamme 2 présentant un mouvement de retour vers l'extrémité du four (6) où la matière à fondre est chargée. Les moyens de récupération d'énergie 11, vers lesquels la flamme 2 est dirigée, fonctionnent, tandis que les moyens de récupération d'énergie 1 placés derrière le brûleur en fonctionnement sont éteints.

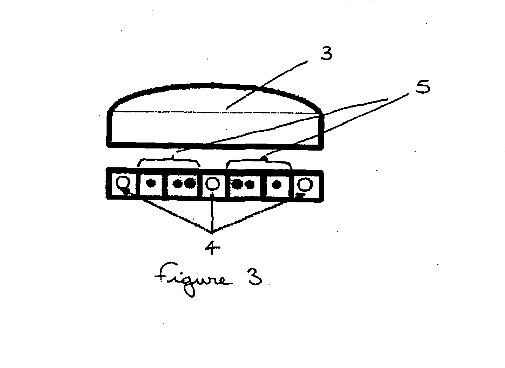

La figure 3 illustre un système de combustion selon l'invention composé :
- d'un brûleur aéro-combustible comprenant une gaine d'air 3 et de trois injecteurs de combustible 4 placés sous la gaine d'air,
- d'un brûleur oxy-combustible comprenant deux ensembles 5 d'injecteurs, chaque ensemble étant disposé symétriquement sous la gaine d'air 3. Un injecteur 4 de combustible du brûleur aéro-combustible est placé entre mes deux ensembles 5 d'injecteurs du brûleur oxy-combustible. Les deux autres injecteurs 4 de combustible du brûleur aéro-combustible sont placés autour des deux ensembles 5 d'injecteurs du brûleur oxy-combustible.

Par mise en oeuvre du procédé et du système de combustion selon l'invention tels que précédemment décrit, il est possible d'augmenter la puissance d'un four équipé de moyens de récupération d'énergie et de brûleurs aéro-combustible et donc d'augmenter la capacité de production du four.

Le procédé et le système de combustion selon l'invention permettent également de mettre en oeuvre les combustions de combustibles de différentes natures selon la nature des brûleurs aéro- ou oxy-combustible.

Le second mode du procédé selon l'invention (dans lequel brûleurs oxy-combustibles fonctionnant en permanence, indépendamment des phases de fonctionnement et d'arrêt des moyens de récupération de chaleur et des brûleurs aéro-combustibles) permet de maintenir la chauffe de la matière en fusion. Du fait du faible volume de fumée créés par les brûleurs oxy-combustible, il n'est en effet pas nécessaire de les éteindre lorsque les moyens de récupération de chaleur changent de mode de fonctionnement. Dans cas, la puissance des brûleurs oxy-combustibles peut être ajustée pour compenser la chauffe dissymétrique des brûleurs aéro-combustibles.

## Revendications

1. Procédé de combustion dans un four équipé de moyens de récupération d'énergie et de brûleurs, dans lequel :
- la chaleur des fumées de combustion est alternativement récupérée par une partie des moyens de récupération d'énergie puis par l'autre partie des moyens de récupération d'énergie,
- au moins une partie des brûleurs sont des brûleurs aéro-combustibles constitués par au moins une gaine d'air sous laquelle ou au centre de laquelle est placée au moins un injecteur d'un premier combustible, ledit injecteur étant perpendiculaire à la paroi du four,
- on met alternativement en oeuvre deux phases :
. une première phase au cours de laquelle seule une partie des moyens de récupération d'énergie fonctionnent et seuls fonctionnent les aéro-brûleurs susceptibles de diriger leurs flammes vers lesdits moyens de récupération d'énergie en fonctionnement,
. une deuxième phase au cours de laquelle seule l'autre partie des moyens de récupération d'énergie fonctionnent et seuls fonctionnent les aéro-brûleurs susceptibles de diriger leurs flammes vers lesdits moyens de récupération d'énergie en fonctionnement,
**caractérisé en ce qu'**au moins un brûleur oxy-combustible est placé sous la gaine d'air d'au moins un brûleur aéro-combustible, ledit brûleur oxy-combustible comprenant des injecteurs de fluides perpendiculaires à la paroi du four et mettant en oeuvre un procédé de combustion étagée d'un second combustible et d'un gaz riche en oxygène, ledit procédé de combustion étagée étant mis en oeuvre de manière à ce qu'on injecte au moins un jet du second combustible et au moins un jet de gaz riche en oxygène, le jet de gaz riche en oxygène comportant un jet primaire de gaz riche en oxygène et un jet secondaire de gaz riche en oxygène,
le jet primaire de gaz riche en oxygène étant injecté à proximité du jet du second combustible de manière à engendrer une première combustion incomplète, les gaz issus de cette première combustion comportant encore au moins une partie du second combustible,
tandis que le jet secondaire de gaz riche en oxygène est injecté à une distance I₂ du jet du second combustible qui est supérieure à la distance entre le jet du second combustible et le jet primaire de gaz riche en oxygène le plus proche du jet du second combustible, de manière à entrer en combustion avec la partie du second combustible présent dans les gaz issus de la première combustion,
le jet primaire de gaz riche en oxygène étant divisé en au moins deux jets primaires : au moins un premier jet primaire de gaz riche en oxygène qui est injecté au contact du jet du second combustible, et au moins un second jet primaire de gaz riche en oxygène injecté à une distance I₁ du jet du second combustible, ladite distance I2 étant supérieure à la distance I1.

2. Procédé selon la revendication 1, **caractérisé en ce que** le four est un four de fusion dans lequel les moyens de récupération d'énergie sont placés sur les côtés latéraux et **en ce qu'**au moins un brûleur oxy-combustible est placé sous une gaine d'air située dans la zone de fusion du four.

3. Procédé selon l'une des revendications 1 ou 2, **caractérisé en ce que** le débit de gaz riche en oxygène injecté par le brûleur oxy-combustible est compris entre 20 et 100 % du débit de gaz riche en oxygène et d'air injecté par ledit brûleur et la gaine d'air sous laquelle il est placé.

4. Procédé selon l'une des revendications 1 à 3, **caractérisé en ce que**, pour chaque brûleur oxy-combustible placé sous la gaine d'air d'un brûleur aéro-combustible en fonctionnement, le débit de gaz riche en oxygène dans le jet de gaz riche en oxygène secondaire représente 70 à 80 % de la quantité totale de gaz riche en oxygène injecté par ledit brûleur oxy-combustible.

5. Procédé selon l'une des revendications 1 à 3, **caractérisé en ce que**, pour chaque brûleur oxy-combustible placé sous la gaine d'air d'un brûleur aéro-combustible en fonctionnement, le débit de gaz riche en oxygène dans le jet de gaz riche en oxygène secondaire représente 45 à 55 % de la quantité totale de gaz riche en oxygène injecté par ledit brûleur oxy-combustible.

6. Procédé selon l'une des revendications 1 à 5, **caractérisé en ce que** seuls les brûleurs oxy-combustibles placés en face des moyens de récupération d'énergie récupérant la chaleur des fumées de combustion fonctionnent.

7. Procédé selon l'une des revendications 1 à 5, **caractérisé en ce que**, pour chaque brûleur oxy-combustible placé sous la gaine d'air d'un brûleur aéro-combustible en arrêt, le débit de gaz riche en oxygène dans le jet de gaz riche en oxygène secondaire représente 70 à 80 % de la quantité totale de gaz riche en oxygène injecté par ledit brûleur oxy-combustible.

8. Procédé selon l'une des revendications 1 à 5, **caractérisé en ce que**, pour chaque brûleur oxy-combustible placé sous la gaine d'air d'un brûleur aéro-combustible en arrêt, le débit de gaz riche en oxygène dans le jet de gaz riche en oxygène secondaire représente 45 à 55 % de la quantité totale de gaz riche en oxygène injecté par ledit brûleur oxy-combustible.

9. Procédé selon l'une des revendications précédentes; **caractérisé en ce que** la combustion mise en oeuvre par les brûleurs aéro-combustibles est sous-stoechiométrique et **en ce que** la combustion mise en oeuvre par les brûleurs oxy-combustibles est sur-stoechiométrique.

10. four comprenant un système pour la mise en oeuvre d'une combustion dans ledit four comprenant :
- au moins un brûleur aéro-combustible composé :
. d'une gaine d'air (3), et
. d'au moins un injecteur de combustible (4) placé sous ou au centre de la gaine d'air (3) et perpendiculaire à la paroi du four, **caracterisé en ce que** le dit système comprend également
- au moins un brûleur oxy-combustible placé sous la gaine d'air du brûleur aéro-combustible et composé d'au moins un ensemble (5) d'injecteurs comprenant :
. au moins un injecteur de combustible,
. au moins un injecteur de gaz riche en oxygène placé de manière à injecter ledit gaz riche en oxygène au contact du combustible injecté par l'injecteur du brûleur oxy-combustible,
. au moins un injecteur de gaz riche en oxygène placé à une distance I₁ de l'injecteur de combustible du brûleur oxy-combustible,
. au moins un injecteur de gaz riche en oxygène à une distance I₂ de l'injecteur de combustible du brûleur oxy-combustible, avec I₂ > I₁,
lesdits injecteurs du brûleur oxy-combustible étant perpendiculaires à la paroi du four.

11. Four selon la revendication 10, **caractérisé en ce que** l'injecteur (4) du premier combustible du brûleur aéro-combustible est placé sous la gaine d'air (3) et **en ce que** ledit injecteur et les injecteurs du brûleur oxy-combustible sont disposés sensiblement dans le même plan horizontal.

12. Four selon la revendication 10 ou 11, **caractérisé en ce que** le brûleur oxy-combustible est composé de deux ensembles (5) d'injecteurs, lesdits ensembles (5) étant disposés symétriquement par rapport au centre de la gaine d'air (3) sous lequel le brûleur est placé.

13. Four selon la revendication 12, **caractérisé en ce qu'**au moins un injecteur de combustible (4) du brûleur aéro-combustible est placé entre les deux ensembles (5) d'injecteurs du brûleur oxy-combustible.

## Claims

1. Combustion method in a furnace provided with energy recovery means and burners, in which:
- the heat of the flue gases is alternately recovered by one part of the energy recovery means and then by the other part of the energy recovery means,
- at least some of the burners are air-fuel burners consisting of at least one air duct under which or in the centre of which at least one injector of a first fuel is placed, said injector being perpendicular to the furnace wall,
- two phases are alternately carried out:
. a first phase during which only one part of the energy recovery means operates and only the air burners capable of sending their flames towards said operating energy recovery means are in operation,
. a second phase during which only the other part of the energy recovery means operates and only the air burners capable of sending their flames to said operating energy recovery means are in operation,
**characterised in that** at least one oxy-fuel burner is placed under the air duct of at least one air-fuel burner, said oxy-fuel burner comprising fluid injectors perpendicular to the furnace wall and carrying out a method of staged combustion of a second fuel and of an oxygen-rich gas, said staged combustion method being carried out in such a way that at least one jet of the second fuel and at least one jet of oxygen-rich gas is injected, the jet of oxygen-rich gas comprising a primary jet of oxygen-rich gas and a secondary jet of oxygen-rich gas,
the primary jet of oxygen-rich gas being injected close to the jet of the second fuel in order to cause a first incomplete combustion, the gases resulting from this first combustion still comprising at least part of the second fuel,
while the secondary jet of oxygen-rich gas is injected at a distance I₂ from the jet of the second fuel which is greater than the distance between the jet of the second fuel and the primary jet of oxygen-rich gas closest to the jet of the second fuel, in order to combust together with the part of the second fuel present in the gases resulting from the first combustion,
the primary jet of oxygen-rich gas being divided into at least two primary jets: at least a first primary jet of oxygen-rich gas which is injected in contact with the jet of the second fuel, and at least a second primary jet of oxygen-rich gas injected at a distance I₁ from the jet of the second fuel, said distance I₂ being greater than the distance I₁.

2. Method according to claim 1, **characterised in that** the furnace is a melting furnace in which the energy recovery means are placed on the lateral sides and **in that** at least one oxy-fuel burner is placed under an air duct located in the furnace melting region.

3. Method according to either claim 1 or claim 2, **characterised in that** the flow rate of oxygen-rich gas injected by the oxy-fuel burner is between 20 and 100 % of the flow rate of oxygen-rich gas and air injected by said burner and the air duct under which it is placed.

4. Method according to any of claims 1 to 3, **characterised in that**, for each oxy-fuel burner placed under the air duct of an operating air-fuel burner, the flow rate of oxygen-rich gas in the secondary jet of oxygen-rich gas represents 70 to 80 % of the total quantity of oxygen-rich gas injected by said oxy-fuel burner.

5. Method according to any of claims 1 to 3, **characterised in that**, for each oxy-fuel burner placed under the air duct of an operating air-fuel burner, the flow rate of oxygen-rich gas in the secondary jet of oxygen-rich gas represents 45 to 55 % of the total quantity of oxygen-rich gas injected by said oxy-fuel burner.

6. Method according to any of claims 1 to 5, **characterised in that** only the oxy-fuel burners placed opposite the energy recovery means recovering the heat from the flue gases are in operation

7. Method according to any of claims 1 to 5, **characterised in that**, for each oxy-fuel burner placed under the air duct of an idle air-fuel burner, the flow rate of oxygen-rich gas in the secondary jet of oxygen-rich gas represents 70 to 80 % of the total quantity of oxygen-rich gas injected by said oxy-fuel burner.

8. Method according to any of claims 1 to 5, **characterised in that**, for each oxy-fuel burner placed under the air duct of an idle air-fuel burner, the flow rate of oxygen-rich gas in the secondary jet of oxygen-rich gas represents 45 to 55 % of the total quantity of oxygen-rich gas injected by said oxy-fuel burner.

9. Method according to any of the preceding claims, **characterised in that** the combustion carried out by the air-fuel burners is substoichiometric and **in that** the combustion carried out by the oxy-fuel burners is superstoichiometric.

10. Furnace comprising a system for carrying out combustion in said furnace comprising:
- at least one air-fuel burner composed of:
. an air duct (3), and
. at least one fuel injector (4) placed under or in the centre of the air duct (3) and perpendicular to the furnace wall, **characterised in that** said system also comprises (1) :
- at least one oxy-fuel burner placed under the air duct of the air-fuel burner and composed of at least one set (5) of injectors comprising:
. at least one fuel injector;
. at least one oxygen-rich gas injector placed so as to inject said oxygen-rich gas in contact with the fuel injected by the injector of the oxy-fuel burner;
. at least one oxygen-rich gas injector placed at a distance I₁ from the fuel injector of the oxy-fuel burner,
. at least one oxygen-rich gas injector at a distance I₂ from the fuel injector of the oxy-fuel burner, where I₂>I₁,
said injectors of the oxy-fuel burner being perpendicular to the furnace wall.

11. Furnace according to claim 10, **characterised in that** the injector (4) of the first fuel of the air-fuel burner is placed under the air duct (3) and **in that** said injector and the injectors of the oxy-fuel burner are arranged substantially in the same horizontal plane.

12. Furnace according to either claim 10 or claim 11, **characterised in that** the oxy-fuel burner is composed of two sets (5) of injectors, said sets (5) being arranged symmetrically relative to the centre of the air duct (3) under which the burner is placed.

13. Furnace according to claim 12, **characterised in that** at least one fuel injector (4) of the air-fuel burner is placed between the two sets (5) of injectors of the oxy-fuel burner.

## Patentansprüche

1. Verbrennungsverfahren in einem Ofen, der mit Mitteln zur Energierückgewinnung und mit Brennern ausgestattet ist, wobei:
- die Wärme der Verbrennungsabgase abwechselnd von einem Teil der Mittel zur Energierückgewinnung, anschließend von dem anderen Teil der Mittel zur Energierückgewinnung zurückgewonnen wird,
- mindestens ein Teil der Brenner Luft-Brennstoff-Brenner sind, die aus mindestens einem Luftkanal gebildet sind, unter dem oder in dessen Mitte mindestens eine Einspritzvorrichtung für einen ersten Brennstoff platziert ist, wobei die Einspritzvorrichtung senkrecht zur Wand des Ofens verläuft,
- abwechselnd zwei Phasen durchgeführt werden:
. eine erste Phase, während deren nur ein Teil der Mittel zur Energierückgewinnung arbeitet und nur die Luftbrenner arbeiten, die ihre Flammen in Richtung der arbeitenden Mittel zur Energierückgewinnung richten können,
. eine zweite Phase, während deren nur der andere Teil der Mittel zur Energierückgewinnung arbeitet und nur die Luftbrenner arbeiten, die ihre Flammen in Richtung der arbeitenden Mittel zur Energierückgewinnung richten können,
**dadurch gekennzeichnet, dass** mindestens ein Sauerstoff-Brennstoff-Brenner unter dem Luftkanal von mindestens einem Luft-Brennstoff-Brenner platziert wird, wobei der Sauerstoff-Brennstoff-Brenner Fluideinspritzvorrichtungen senkrecht zur Wand des Ofens umfasst und ein Verfahren zur abgestuften Verbrennung eines zweiten Brennstoffs und eines sauerstoffreichen Gases nutzt, wobei das Verfahren zur abgestuften Verbrennung eingesetzt wird, damit mindestens ein Strahl des zweiten Brennstoffs und mindestens ein Strahl sauerstoffreichen Gases eingespritzt werden, wobei der Strahl sauerstoffreichen Gases einen Primärstrahl sauerstoffreichen Gases und einen Sekundärstrahl sauerstoffreichen Gases aufweist,
wobei der Primärstrahl sauerstoffreichen Gases in der Nähe des Strahls des zweiten Brennstoffs eingespritzt wird, damit eine erste unvollständige Verbrennung bewirkt wird, wobei die Gase aus dieser ersten Verbrennung noch mindestens einen Teil des zweiten Brennstoffs enthalten,
während der Sekundärstrahl sauerstoffreichen Gases in einem Abstand I₂ zum Strahl des zweiten Brennstoffs eingespritzt wird, der größer ist als der Abstand zwischen dem Strahl des zweiten Brennstoffs und dem Primärstrahl sauerstoffreichen Gases, der dem Strahl des zweiten Brennstoffs am nächsten ist, um mit dem Teil des zweiten Brennstoffs, der in den Gasen aus der ersten Verbrennung enthalten ist, verbrannt zu werden,
wobei der Primärstrahl sauerstoffreichen Gases in mindestens zwei Primärstrahlen aufgeteilt wird: mindestens einen ersten Primärstrahl sauerstoffreichen Gases, der im Kontakt mit dem Strahl des zweiten Brennstoffs eingespritzt wird, und mindestens einen zweiten Primärstrahl sauerstoffreichen Gases, der in einem Abstand I₁ zum Strahl des zweiten Brennstoffs eingespritzt wird, wobei der Abstand I₂ größer ist als der Abstand I₁.

2. Verfahren nach Anspruch 1, **dadurch gekennzeichnet, dass** der Ofen ein Schmelzofen ist, in dem die Mittel zur Energierückgewinnung an den Querseiten platziert sind, und dadurch, dass mindestens ein Sauerstoff-Brennstoff-Brenner unter einem Luftkanal platziert ist, der sich in dem Schmelzbereich des Ofens befindet.

3. Verfahren nach einem der Ansprüche 1 oder 2, **dadurch gekennzeichnet, dass** die Durchflussmenge des sauerstoffreichen Gases, das von dem Sauerstoff-Brennstoff-Brenner eingespritzt wird, zwischen 20 und 100 % der Durchflussmenge des sauerstoffreichen Gases und der Luft beträgt, die von dem Brenner und dem Luftkanal, unter dem er platziert ist, eingespritzt wird.

4. Verfahren nach einem der Ansprüche 1 bis 3, **dadurch gekennzeichnet, dass**, für jeden Sauerstoff-Brennstoff-Brenner, der unter dem Luftkanal eines arbeitenden Luft-Brennstoff-Brenners platziert ist, die Durchflussmenge des sauerstoffreichen Gases in dem Sekundärstrahl sauerstoffreichen Gases 70 bis 80 % der Gesamtmenge des sauerstoffreichen Gases, das von dem Sauerstoff-Brennstoff-Brenner eingespritzt wird, beträgt.

5. Verfahren nach einem der Ansprüche 1 bis 3, **dadurch gekennzeichnet, dass**, für jeden Sauerstoff-Brennstoff-Brenner, der unter dem Luftkanal eines arbeitenden Luft-Brennstoff-Brenners platziert ist, die Durchflussmenge des sauerstoffreichen Gases in dem Sekundärstrahl sauerstoffreichen Gases 45 bis 55 % der Gesamtmenge des sauerstoffreichen Gases, das von dem Sauerstoff-Brennstoff-Brenner eingespritzt wird, beträgt.

6. Verfahren nach einem der Ansprüche 1 bis 5, **dadurch gekennzeichnet, dass** nur die Sauerstoff-Brennstoff-Brenner arbeiten, die gegenüber den Mitteln zur Energierückgewinnung platziert sind, die die Wärme der Verbrennungsabgase zurückgewinnen.

7. Verfahren nach einem der Ansprüche 1 bis 5, **dadurch gekennzeichnet, dass**, für jeden Sauerstoff-Brennstoff-Brenner, der unter dem Luftkanal eines außer Betrieb befindlichen Luft-Brennstoff-Brenners platziert ist, die Durchflussmenge des sauerstoffreichen Gases in dem Sekundärstrahl sauerstoffreichen Gases 70 bis 80 % der Gesamtmenge des sauerstoffreichen Gases, das von dem Sauerstoff-Brennstoff-Brenner eingespritzt wird, beträgt.

8. Verfahren nach einem der Ansprüche 1 bis 5, **dadurch gekennzeichnet, dass**, für jeden Sauerstoff-Brennstoff-Brenner, der unter dem Luftkanal eines außer Betrieb befindlichen Luft-Brennstoff-Brenners platziert ist, die Durchflussmenge des sauerstoffreichen Gases in dem Sekundärstrahl sauerstoffreichen Gases 45 bis 55 % der Gesamtmenge des sauerstoffreichen Gases, das von dem Sauerstoff-Brennstoff-Brenner eingespritzt wird, beträgt.

9. Verfahren nach einem der vorhergehenden Ansprüche, **dadurch gekennzeichnet, dass** die von den Luft-Brennstoff-Brennern durchgeführte Verbrennung unterstöchiometrisch ist und dadurch, dass die von den Sauerstoff-Brennstoff-Brennern durchgeführte Verbrennung überstöchiometrisch ist.

10. Ofen, der ein System für die Durchführung einer Verbrennung in dem Ofen umfasst, umfassend:
- mindestens einen Luft-Brennstoff-Brenner, der zusammengesetzt ist:
. aus einem Luftkanal (3), und
. aus mindestens einer Einspritzvorrichtung für einen Brennstoff (4), die unter dem oder in der Mitte des Luftkanals (3) und senkrecht zur Wand des Ofens platziert ist, **dadurch gekennzeichnet, dass** das System auch Folgendes umfasst (1) :
- mindestens einen Sauerstoff-Brennstoff-Brenner, der unter dem Luftkanal des Luft-Brennstoff-Brenners platziert ist und aus mindestens einer Anordnung (5) aus Einspritzvorrichtungen zusammengesetzt ist, die Folgendes umfasst:
. mindestens eine Einspritzvorrichtung für einen Brennstoff,
. mindestens eine Einspritzvorrichtung für ein sauerstoffreiches Gas, die so platziert ist, dass das sauerstoffreiche Gas im Kontakt mit dem Brennstoff, der von der Einspritzvorrichtung des Sauerstoff-Brennstoff-Brenners eingespritzt wird, eingespritzt wird,
. mindestens eine Einspritzvorrichtung für ein sauerstoffreiches Gas, die in einem Abstand I₁ zur Einspritzvorrichtung für den Brennstoff des Sauerstoff-Brennstoff-Brenners platziert ist,
. mindestens eine Einspritzvorrichtung für ein sauerstoffreiches Gas, die in einem Abstand I₂ zur Einspritzvorrichtung für den Brennstoff des Sauerstoff-Brennstoff-Brenners platziert ist, wobei I₂ > I₁,
wobei die Einspritzvorrichtungen des Sauerstoff-Brennstoff-Brenners senkrecht zur Wand des Ofens verlaufen.

11. Ofen nach Anspruch 10, **dadurch gekennzeichnet, dass** die Einspritzvorrichtung (4) für den ersten Brennstoff des Luft-Brennstoff-Brenners unter dem Luftkanal (3) platziert ist und dadurch, dass die Einspritzvorrichtung und die Einspritzvorrichtungen des Sauerstoff-Brennstoff-Brenners im Wesentlichen in derselben waagerechten Ebene angeordnet sind.

12. Ofen nach Anspruch 10 oder 11, **dadurch gekennzeichnet, dass** der Sauerstoff-Brennstoff-Brenner aus zwei Anordnungen (5) von Einspritzvorrichtungen zusammengesetzt ist, wobei die Anordnungen (5) symmetrisch zur Mitte des Luftkanals (3) angeordnet sind, unter dem der Brenner platziert ist.

13. Ofen nach Anspruch 12, **dadurch gekennzeichnet, dass** mindestens eine Einspritzvorrichtung für den Brennstoff (4) des Luft-Brennstoff-Brenners zwischen den beiden Anordnungen (5) von Einspritzvorrichtungen des Sauerstoff-Brennstoff-Brenners platziert ist.
